# EUROPEAN PATENT SPECIFICATION

(11) **EP 2 975 432 B1**
(45) Date of publication and mention of the grant of the patent: **01.03.2017**
(21) Application number: 15176369.5
(22) Date of filing: 11.07.2015
(51) Int. Cl.: G01V 1/18, G01S 1/72, G10K 11/00, H04R 1/44, B06B 1/06, G01H 11/08

(54) **LOW COST HYDROPHONE**
KOSTENGÜNSTIGES HYDROPHON
HYDROPHONE À BAS COÛT

(30) Priority: 11.07.2014 TR 201408127
(43) Date of publication of application: 20.01.2016
(73) Proprietor: Istanbul Universitesi Teknoloji Transfer Uygulama ve Arastirma Merkezi, 34320 Istanbul (TR)
(72) Inventor: Gazioglu, Cem, 34134 Istanbul (TR); Müftüoglu, Ahmet Edip, 34134 Istanbul (TR); Okutan, Volkan, 34134 Istanbul (TR)
(74) Representative: Mutlu, Aydin

(56) References cited:
- KR-A- 20010 090 269
- Anonymous: "Leafcutter's DIY Steel Can Hydrophone & Preamp. Step-by-step guide *schematic link fixed!* | leafcutterjohn.com", , 1 January 2012 (2012-01-01), XP055233975, Retrieved from the Internet: URL:http://leafcutterjohn.com/?page_id=957 [retrieved on 2015-12-07]
- Anonymous: "Now you can record mermaids singing | Hackaday", , 20 February 2010 (2010-02-20), XP055234001, Retrieved from the Internet: URL:http://hackaday.com/2010/02/17/now-you -can-record-mermaids-singing/ [retrieved on 2015-12-07]
- Anonymous: "UCSB Science Line", , 22 September 2015 (2015-09-22), XP055234005, Retrieved from the Internet: URL:http://scienceline.ucsb.edu/getkey.php ?key=459 [retrieved on 2015-12-07]

## Description

### Technical Field of the Invention

The present invention relates to a low cost hydrophone which can realize sound perception and transfer functions underwater, which is used in order to listen to and record of the sounds propagating in the underwater medium, thanks to water proof insulation covering the microphone pre-amplifier circuit.

### Description of the Invention

Hydrophone, in simplest terms, can be identified as an underwater microphone. Microphones are the devices that convert the pressure changes caused by sound waves into electrical vibrations. Hydrophones realize this function underwater.

In the scientific and military area, hydrophones are used in various underwater acoustics studies. At the present time, it is known that the increasing human-driven noise on the sea and shores influence negatively the vital activities of marine species based on sound and hearing. Consequently, the determination and assessment of such effects became the subject matter of marine sciences. In the mentioned scientific studies, the detection of the underwater medium noise is carried out by hydrophones. In these studies; biological (the sounds of the marine species for communication and perception of the medium etc.), natural (rain, wave, wind etc.) and human driven sounds (ship traffic, sonar and construction of bridges, tunnels etc.) are collected by hydrophone from underwater as acoustic data. Furthermore, underwater acoustic signatures of the submarines and ships; are determined by measuring the engine and screw outputs by hydrophones. Acoustic signatures are used as an identifier specifically in the military ships.

There are various types of hydrophones in the market, which are designed for the different areas of use mentioned above. In general, a quality hydrophone is expected to perceive from a large frequency interval, have a high level of sensor sensitivity and low level of resonance sensitivity and to be able to operate at depths which are required for measuring. However, many of the quality hydrophones available on the market are sold with high prices. This causes a problem especially for the scientific researches. The budget of many researches cannot afford the hydrophones available on the market. Formation of hydrophone series which are used for receiving acoustic data simultaneously from the different depths, is quite costly. This forces the researchers to look for solutions with lower costs.

In the state of the art, there are hydrophones produced with low cost. In many hydrophones, piezoelectric transducers producing electricity signal are used when the pressure caused by the sound waves is subject to a change. In the state of art, the most important differences between the hydrophones appear in the underwater elements and water insulation forms.

The first hydrophone type in the state of art is the one which contains only piezoelectric transducer element (sensor) underwater. Such hydrophones are basically composed of water-insulated piezoelectric ceramic disk and cable. Water insulation can be easily carried out since the piezoelectric ceramic disk is a single round, flat and thin piece. As a result, such types of hydrophones are frequently seen in the current applications. Piezoelectric disk converts the pressure changes caused by the sound waves propagating underwater, into electrical signals in the mentioned hydrophones and this electrical signal is transmitted above the water by a cable. In these hydrophone systems, the sounds reaching above the water as electrical signals are generally boosted by an amplifier and are sent to a speaker or a sound card. However, in such hydrophones, the signals sent from the piezoelectric element underwater without any boosting encounter a loss through the cable. This causes significant loss of data depending on the length of the cable and as a result, influences the accuracy of the scientific research negatively.

In the other hydrophones in the state of the art, there is also pre-amplifier circuit underwater together with the piezoelectric element in order to prevent the data loss. Pre-amplifiers are used in order to amplify the signal transmitted through the cable, without deforming the sound-signal rate. The closer the pre-amplifier is positioned to the sensor the more productive and problem-free operation is enabled. Due to this reason, pre-amplifiers which are positioned very close to the sensor in the hydrophones are required to be insulated well for water. However, the factors such as the irregular structure of the pre-amplifier circuits, the sensitivity of the electronic circuit elements and the connections make the insulation difficult. In the state of the art, there are some different insulation methods used for the hydrophones with pre-amplifiers.

One of these methods is to keep the piezoelectric sensor and pre-amplifier circuit in a metal, plastic etc. box that has water insulation. The insulation of the box for water can be realized in many different ways such as welding, gasket, silicone, rubber welding strip etc. However, when the elements are fixed and the box is closed in this method, there remains some gap (air) in the box eventually. This gap causes the internal-external pressure balance to change critically underwater. Due to this reason, protection boxes are required to be produced of materials that can withstand the depth at which the studies shall be carried out. Any deformation of the protection box due to the internal-external pressure difference can cause deformation of the water insulation. However, the most important problem caused by the gap in the box is that it increases the hydrophone's noise within the device. In the devices such as microphones and hydrophones; there are sounds within the device due to the factors such as electrical current, cable connections etc. These sounds are named as "60 Hz hum" in the literature. For the accuracy of an acoustic measure the sounds within the device are required to be lower than the sound levels measured. However, the gap inside the protection box causes and increases the intensification of the internal sounds and interference. Moreover, the mentioned gap may cause the interference on the sounds perceived by the hydrophone and result in jamming.

In the state of the art; the gap is filled by various oils in order to eliminate the problems caused by the gap in the protection box. However, chemical oils cause deformation of some electronic elements of the pre-amplifier circuit by time. This shortens the life of the hydrophone. Also, chemical oils of high quality are expensive. These oils increase the cost of the hydrophone considerably.

Another issue in low cost hydrophones is the elimination of the interference noises (sizzling, buzzing, interference etc.) arising with movements of the elements and connections. Interference noise is quite high since these movements cannot be prevented in many of the low cost hydrophones.

Moreover, the material covering of the piezoelectric sensor is very important in the insulation or the protection box. The vibration mode of the materials such as thick rubber, plastic, thin metal, sheet metal (specifically if there is a gap between the sensor and the material) may deform the frequency of the sounds perceived.

Document XP055233975 discloses a home-made steel hydrophone and pre-amplifier can. Piezoelectric elements are super-glued and covered in copious amount of hot glue to eliminate any possibility of the pre-amp circuit shorting out on the piezoelectric elements. Before closing the unit the pre-amp circuit is covered with a lot of hot-glue to seal it off from stray water.

The present invention which relates to the low cost hydrophone realizing the sound perception and transmission functions underwater thanks to the water proof insulation covering the microphone and pre-amplifier circuit, and which is used to listen and record the sound propagating in underwater medium, completely overcomes above mentioned disadvantages and it is characterized by; transmission of data without any loss from any depth sufficient for the scientific researches thanks to the pre-amplifier circuit, good insulation of the circuit against water by the cyanoacrylate and sodium bicarbonate covering the pre-amplifier circuit and prevention of the interference noise formed as a result of the connection and movements of the elements. The hydrophone according to the present invention may further be provided with a fine latex coat covering the piezoelectric sensor not influencing the frequency of the sounds perceived, and it features minimization of the internal sounds of the hydrophone due to the gap-free and stable structure of the insulation, whereas durable and long-life structure for hydrophone is ensured.

The present invention has a standard pre-amplifier circuit together with the piezoelectric sensor. By this way, data can be transmitted without any loss through long cables. Piezoelectric sensor is placed on the pre-amplifier circuit. Accordingly, the sensor and circuit can operate effectively and problem-free.

Pre-amplifier circuit can be coated with a mixture of cyanoacrylate and sodium bicarbonate - in a way that only piezoelectric sensor is exposed out of the coating. Cyanoacrylate and sodium bicarbonate mix dries easily and when dried, forms a hard, smooth, gap-free and resistant structure. This structure both protects the circuit against water and prevents the internal sounds and interfering noises. The cable input connected to the pre-amplifier circuit is also covered with this dielectric mix. By this way, the acoustic interferences arising of the movement of the cable connection points are prevented. Moreover, a silicone layer can be applied on the cyanoacrylate and sodium bicarbonate mix, whereby the water insulation is reinforced and the surface smoothness is enabled. Smooth surface enable the best application of vacuum latex coating.

Piezoelectric sensor and pre-amplifier circuit insulated with cyanoacrylate and sodium bicarbonate mix is coated with a thin and resistant layer of latex material. Since the coating is carried out with vacuum, no gaps remain between the latex coating and the circuit. Latex coating protects the piezoelectric sensor against water at a good level. Furthermore, latex coating acts like a microphone diaphragm and protects the frequencies of the sounds perceived by the sensor. The sensor perceives the sound pressure very well, thanks to the thin latex coating.

Gap free and stable structure minimizes the internal sounds of the hydrophone. This way, it can be used for all types of underwater acoustic researches (marine traffic noise, sounds of the sea mammals, underwater medium noise determination etc.).

In the present invention, a standard pre-amplifier circuit with piezoelectric sensor is used. Cyanoacrylate is the substance which can easily be found in the market and which is named by the public "Super Glue". Sodium bicarbonate, latex material in the form of a balloon and water insulation silicone are the materials that are easily found in the market, and they do not increase the costs considerably. Accordingly, the present invention provides a completely low cost hydrophone.

The present invention is explained in detail through exemplifying with the attached drawings, wherein;

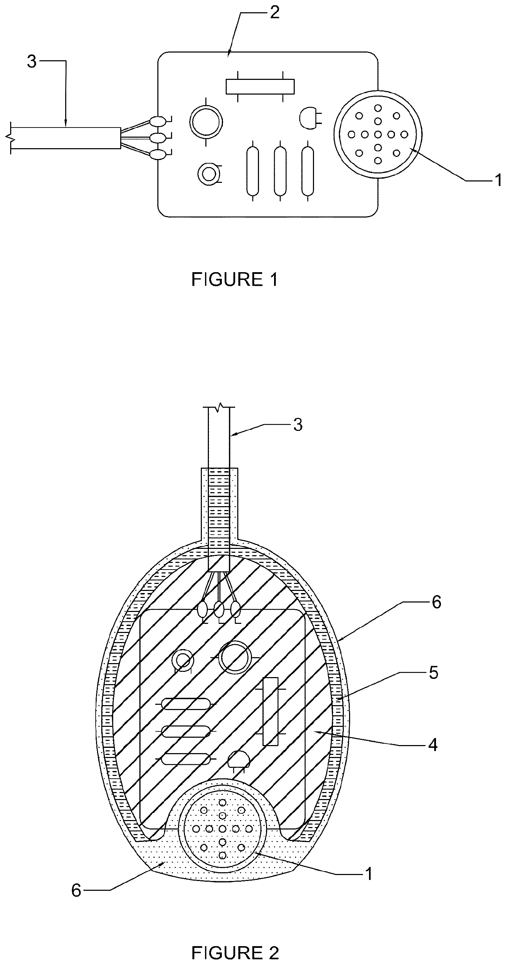

- Figure 1: is a view of the low cost hydrophone without water insulation.
- Figure 2: is a view of the low cost hydrophone with water insulation.

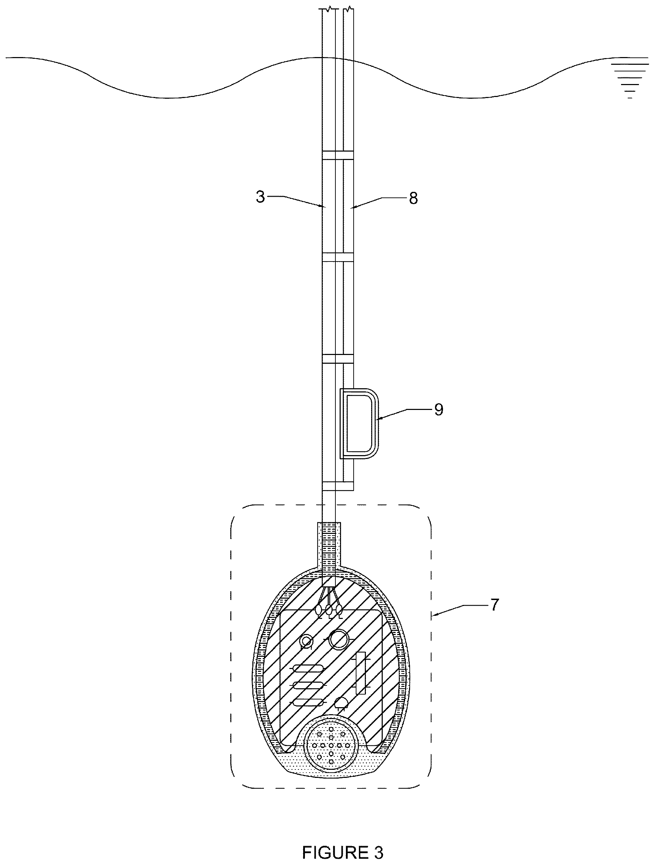

- Figure 3: is a general view of the low cost hydrophone.

### Description of the Part Numbers

- 1: Piezoelectric element
- 2: Pre-amplifier circuit
- 3: Cable
- 4: Cyanoacrylate and sodium bicarbonate mix layer
- 5: Silicone layer
- 6: Latex coating
- 7: Outer casing
- 8: Rope
- 9: Weight

The present invention which relates to a low cost hydrophone realizing sound perception and transfer functions underwater and consequently, which is used in order to listen and record of the sounds propagating in the underwater medium, thanks to water proof insulation covering the microphone pre-amplifier circuit is generally characterized by; a piezoelectric element (1) receiving the pressure caused by the sound waves propagating underwater and converting these into electrical signals, a pre-amplifier circuit (2) preventing the data loss along the cable (3) by amplifying the electrical signal, a cable (3) transmitting the electrical signal above the water, a cyanoacrylate and sodium bicarbonate mix (4) covering the pre-amplifier circuit (2), a silicone layer (5) covering the surface of the cyanoacrylate and sodium bicarbonate mix (4), a latex coating (6) covering by vacuum the pre-amplifier circuit (2) insulated with cyanoacrylate and sodium bicarbonate mix (4) and the piezoelectric element (1), a perforated outer casing (7) protecting the hydrophone from the foreign particles and impacts, and a rope (8) carrying a weight (9) enabling the hydrophone to remain underwater.

The production and use of the invention is as follows:

The cable (3) connections such as output, feed, earthing of the pre-amplifier circuit (2) having a piezoelectric element (1) are formed. The pre-amplifier circuit (2) and the cable (3) connection places are coated all around with a mixture of cyanoacrylate and sodium bicarbonate so that only the piezoelectric element (1) is exposed to out of this coating. The cyanoacrylate and sodium bicarbonate mix (4), which dries and hardens, forms a strong layer on the pre-amplifier circuit (2). Water proofing is reinforced with a silicone layer (5) applied on the layer of cyanoacrylate and sodium bicarbonate mix (4) and the surface smoothness is provided. On top of all, a latex coating (6) is applied by vacuum in a way to cover the piezoelectric element (1) and a part of the cable (3). The mouth part of the latex coating (6) in the form of a balloon is tightly adhered around the cable (3), for instance by using silicone adhesive and band. In the outermost part of the hydrophone there is a perforated outer casing (7) where water can flow through. The outer casing (7) protects the structure against the foreign particles and small scale impacts. The hydrophone sinks into the water by a rope (8) connected to the cable (3) at various points and a weight (9) is connected to the rope (8). The sound waves propagating underwater are received and sensed by the piezoelectric element (1). The pressure caused by the sound waves are converted into electrical signals by the said piezoelectric element (1). This electrical signal is amplified at the pre-amplifier circuit (2) and is transmitted above water through the cable (3).

## Claims

1. A hydrophone comprising;
a piezoelectric element (1) receiving pressure caused by sound waves propagating underwater and converting these into electrical signals,
a pre-amplifier circuit (2) for amplifying the electrical signals, and
a cable (3) connected to said pre-amplifier circuit (2) for transmitting the electrical signal above the water;
**characterized in that** the hydrophone further comprises a cyanoacrylate and sodium bicarbonate mix layer (4) coated over the pre-amplifier circuit (2), and an additional silicone layer (5) covering the surface of said cyanoacrylate and sodium bicarbonate mix layer (4).

2. A hydrophone according to claim 1 wherein the hydrophone further comprises a latex coating (6) in the form of a balloon covering the pre-amplifier circuit (2) which is insulated with cyanoacrylate and sodium bicarbonate mix layer (4) and the silicone layer (5).

3. A hydrophone according to claim 2 wherein said latex coating (6) is formed such that the piezoelectric element (1) is exposed to out of said coating.

4. A hydrophone according to claim 1 wherein said cyanoacrylate and sodium bicarbonate mix layer (4) comprises super glue.

5. A hydrophone according to claim 1 wherein said cyanoacrylate and sodium bicarbonate mix layer (4) covers at least a portion of the cable (3).

6. A hydrophone according to Claim 1 wherein said hydrophone further comprises a perforated outer casing (7) at the outermost part of the hydrophone which protects its structure against foreign particles and impacts.

7. A hydrophone according to Claim 1 wherein said hydrophone further comprises a weight (9) enabling the hydrophone to remain underwater and a rope (8) carrying the weight (9).

8. A method for producing a hydrophone comprising the steps of:
providing a piezoelectric element (1) receiving pressure caused by sound waves propagating underwater and converting these into electrical signals; a pre-amplifier circuit (2) for amplifying the electrical signals; and a cable (3) connected to said pre-amplifier circuit (2) for transmitting the electrical signal above the water;
coating of a mixture of cyanoacrylate and sodium bicarbonate over the said pre-amplifier circuit (2), and
coating of the so formed cyanoacrylate and sodium bicarbonate mix layer (4) with a silicon layer (5).

9. A method according to claim 8 further comprising application of a latex coating (6) in the form of a balloon under vacuum so as to cover the pre-amplifier circuit (2) which is insulated with cyanoacrylate and sodium bicarbonate mix layer (4) and the silicone layer (5).

10. A method according to claim 9 wherein said latex coating (6) is formed such that the piezoelectric element (1) is exposed to out of said coating.

11. A method according to claim 8 wherein said cyanoacrylate and sodium bicarbonate mix layer (4) comprises super glue.

12. A method according to claim 8 wherein said cyanoacrylate and sodium bicarbonate mix layer (4) is applied also on at least a portion of the cable (3).

13. A method according to claim 8 wherein said method further comprises provision of a perforated outer casing (7) at the outermost part of the hydrophone for protecting its structure against foreign particles and impacts.

14. A method according to claim 8 wherein said method further comprises provision of a weight (9) enabling the hydrophone to remain underwater and a rope (8) carrying the said weight (9).

15. Use of the hydrophone according to claim 1 in measuring and recording of sound underwater.

## Patentansprüche

1. Hydrophon umfassend:
ein piezoelektrisches Element (1), das Duck aufnimmt, der durch sich unter Wasser ausbreitende Schallwellen erzeugt wird, und das diese in elektrische Signale umwandelt,
eine Vorverstärkerschaltung (2) zum Verstärken der elektrischen Signale, und
ein Kabel (3), das mit der Vorverstärkerschaltung (2) verbunden ist, zum Übertragen des elektrischen Signals oberhalb des Wassers;
**dadurch gekennzeichnet, dass**
das Hydrophon weiterhin eine Cyanoacrylat- und Natriumbicarbonat-Mischschicht (4), die über der Vorverstärkerschaltung (2) aufgebracht ist, und eine zusätzliche Silikonschicht (5), die die Oberfläche der Cyanoacrylat- und Natriumbicarbonat-Mischschicht (4) bedeckt, umfasst.

2. Hydrophon nach Anspruch 1, wobei das Hydrophon weiterhin eine Latex-Beschichtung (6) in Form eines Ballons umfasst, die die Vorverstärkerschaltung (2) bedeckt, die mit der Cyanoacrylat- und Natriumbicarbonat-Mischschicht (4) und der Silikonschicht (5) isoliert ist.

3. Hydrophon nach Anspruch 2,
wobei die Latex-Beschichtung (6) so geformt ist, dass das piezoelektrische Element (1) aus der Beschichtung exponiert ist.

4. Hydrophon nach Anspruch 1, wobei die Cyanoacrylat- und Natriumbicarbonat-Mischschicht (4) Sekundenkleber umfasst.

5. Hydrophon nach Anspruch 1, wobei die Cyanoacrylat- und Natriumbicarbonat-Mischschicht (4) mindestens einen Teil des Kabels (3) bedeckt.

6. Hydrophon nach Anspruch 1, wobei das Hydrophon weiterhin ein perforiertes Außengehäuse (7) am äußersten Teil des Hydrophons umfasst, das seinen Aufbau gegen Fremdteilchen und Stoßwirkungen schützt.

7. Hydrophon nach Anspruch 1, wobei das Hydrophon weiterhin ein Gewicht (9), das das Hydrophon in die Lage versetzt, unter Wasser zu verbleiben, und ein Seil (8), das das Gewicht (9) trägt, umfasst.

8. Verfahren zur Herstellung eines Hydrophons umfassend die folgenden Schritte:
Bereitstellen eines piezoelektrischen Elements (1), das Druck aufnimmt, der durch sich unter Wasser ausbreitenden Schallwellen bewirkt wird, und diese in elektrische Signale umwandelt; eine Vorverstärkerschaltung (2) zum Verstärken der elektrischen Signale; und ein Kabel (3), das mit der Vorverstärkerschaltung (2) verbunden ist, zum Übertragen des elektrischen Signals oberhalb des Wassers;
Aufbringen eines Gemisches von Cyanoacrylat und Natriumbicarbonat über der Vorverstärkerschaltung (2), und
Überziehen der so gebildeten Cyanoacrylat- und Natriumbicarbonat-Mischschicht (4) mit einer Silikonschicht (5).

9. Verfahren nach Anspruch 8 weiterhin umfassend das Aufbringen einer Latex-Beschichtung (6) in Form eines Ballons unter Vakuum, so dass die Vorverstärkerschaltung (2) bedeckt ist, die mit der Cyanoacrylat- und Natriumbicarbonat-Mischschicht (4) und der Silikonschicht (5) isoliert ist.

10. Verfahren nach Anspruch 9, wobei die Latex-Beschichtung (6) so geformt ist, dass das piezoelektrische Element (1) aus der Beschichtung exponiert ist.

11. Verfahren nach Anspruch 8, wobei die Cyanoacrylat- und Natriumbicarbonat-Mischschicht (4) Sekundenkleber umfasst.

12. Verfahren nach Anspruch 8, wobei die Cyanoacrylat- und Natriumbicarbonat-Mischschicht (4) auch auf mindestens einen Teil des Kabels (3) aufgebracht wird.

13. Verfahren nach Anspruch 8, wobei das Verfahren weiterhin das Vorsehen eines perforierten Außengehäuses (7) am äußersten Teil des Hydrophons zum Schutz seines Aufbaus gegen Fremdteilchen und Stoßwirkungen umfasst.

14. Verfahren nach Anspruch 8, wobei das Verfahren weiterhin das Vorsehen eines Gewichts (9), das das Hydrophon in die Lage versetzt, unter Wasser zu verbleiben, und ein Seil (8), das das Gewicht (9) trägt, umfasst.

15. Verwendung des Hydrophons nach Anspruch 1 beim Messen und Aufzeichnen von Schall unter Wasser.

## Revendications

1. Hydrophone qui comprend :
un élément piézoélectrique (1) qui reçoit une pression provoquée par des ondes sonores qui se propagent sous l'eau, et qui convertit ces ondes sonores en signaux électriques,
un circuit préamplificateur (2) destiné à amplifier les signaux électriques, et
un câble (3) relié audit circuit préamplificateur (2) afin de transmettre le signal électrique au-dessus de l'eau ;
**caractérisé en ce que**
l'hydrophone comprend en outre une couche de mélange de cyanoacrylate et de bicarbonate de sodium (4) appliquée sur le circuit préamplificateur (2), et une couche supplémentaire de silicone (5) qui recouvre la surface de ladite couche de mélange de cyanoacrylate et de bicarbonate de sodium (4).

2. Hydrophone selon la revendication 1, dans lequel l'hydrophone comprend en outre un revêtement en latex (6) sous la forme d'un ballonnet qui recouvre le circuit préamplificateur (2) qui est isolé avec la couche de mélange de cyanoacrylate et de bicarbonate de sodium (4) et la couche de silicone (5).

3. Hydrophone selon la revendication 2, dans lequel ledit revêtement en latex (6) est formé de sorte que l'élément piézoélectrique (1) soit exposé à l'extérieur dudit revêtement.

4. Hydrophone selon la revendication 1, dans lequel ladite couche de mélange de cyanoacrylate et de bicarbonate de sodium (4) comprend de la colle forte.

5. Hydrophone selon la revendication 1, dans lequel ladite couche de mélange de cyanoacrylate et de bicarbonate de sodium (4) recouvre au moins une partie du câble (3).

6. Hydrophone selon la revendication 1, dans lequel ledit hydrophone comprend en outre un boîtier externe perforé (7) au niveau de la partie la plus extérieure de l'hydrophone qui protège sa structure contre les particules étrangères et les chocs.

7. Hydrophone selon la revendication 1, dans lequel ledit hydrophone comprend en outre un poids (9) qui permet à l'hydrophone de rester sous l'eau, et un câble (8) qui permet de supporter le poids (9).

8. Procédé de fabrication d'un hydrophone comprenant les étapes consistant à :
prévoir un élément piézoélectrique (1) qui reçoit une pression provoquée par des ondes sonores se propageant sous l'eau, et qui convertit ces ondes sonores en signaux électriques ; un circuit préamplificateur (2) destiné à amplifier les signaux électriques, et un câble (3) relié audit circuit préamplificateur (2) afin de transmettre le signal électrique au-dessus de l'eau ;
appliquer un mélange de cyanoacrylate et de bicarbonate de sodium sur ledit circuit préamplificateur (2), et
appliquer la couche de mélange de cyanoacrylate et de bicarbonate de sodium ainsi formée (4) avec une couche de silicone (5).

9. Procédé selon la revendication 8, comprenant en outre l'application d'un revêtement en latex (6) sous la forme d'un ballonnet sous vide de façon à recouvrir le circuit préamplificateur (2) qui est isolé avec la couche de mélange de cyanoacrylate et de bicarbonate de sodium (4) et la couche de silicone (5).

10. Procédé selon la revendication 9, dans lequel ledit revêtement en latex (6) est formé de sorte que l'élément piézoélectrique (1) soit exposé à l'extérieur dudit revêtement.

11. Procédé selon la revendication 8 dans lequel ladite couche de mélange de couche de cyanoacrylate et de bicarbonate de sodium (4) comprend de la colle forte.

12. Procédé selon la revendication 8, dans lequel ladite couche de mélange de cyanoacrylate et de bicarbonate de sodium (4) est également appliquée sur au moins une partie du câble (3).

13. Procédé selon la revendication 8, dans lequel ledit procédé comprend en outre le fait de prévoir un boîtier externe perforé (7) au niveau de la partie la plus extérieure de l'hydrophone, afin de protéger sa structure contre les particules étrangères et les chocs.

14. Procédé selon la revendication 8, dans lequel ledit procédé comprend en outre le fait de prévoir un poids (9) qui permet à l'hydrophone de rester sous l'eau, et un câble (8) qui permet de supporter le poids (9).

15. Utilisation de l'hydrophone selon la revendication 1 pour mesurer et enregistrer les bruits sous-marins.
